# FASCICULE DE BREVET EUROPEEN

(11) **EP 1 941 569 B1**
(45) Date de publication et mention de la délivrance du brevet: **04.09.2013**
(21) Numéro de dépôt: 06820234.0
(22) Date de dépôt: 18.10.2006
(51) Int. Cl.: H01M 4/92, H01M 4/88, H01M 4/86, H01M 8/08

(54) **ELECTRODE POUR PILE A COMBUSTIBLE ALCALINE ET PROCEDE DE FABRICATION D'UNE PILE A COMBUSTIBLE COMPORTANT AU MOINS UNE ETAPE DE FABRICATION D'UNE TELLE ELECTRODE**
ELEKTRODE FÜR EINE ALKALI-BRENNSTOFFZELLE UND VERFAHREN ZUR HERSTELLUNG EINER BRENNSTOFFZELLE MIT MINDESTENS EINEM SCHRITT ZUR HERSTELLUNG EINER SOLCHEN ELEKTRODE
ELECTRODE FOR AN ALKALI FUEL CELL AND METHOD FOR MAKING A FUEL CELL INCLUDING AT LEAST ONE STEP OF MAKING SUCH AN ELECTRODE

(30) Priorité: 19.10.2005 FR 0510658
(43) Date de publication de la demande: 09.07.2008
(73) Titulaire: Commissariat à l'Énergie Atomique et aux Énergies Alternatives, 75015 Paris (FR); Université de Montpellier II, 34095 Montpellier Cedex 5 (FR); Centre National de la Recherche Scientifique, 75794 Paris Cedex 16 (FR)
(72) Inventeur: MARTINENT, Audrey, F-38000 Grenoble (FR); LAURENT, Jean-Yves, F-38420 Domene (FR); PERRIN, Max, F-38120 Le Fontanil Cornillon (FR); SCHIEDA, Mauricio, 8000 Bahia Blanca (AR); DURAND, Jean, F-34070 Montpellier (FR); ROUALDES, Stéphanie, F-34070 Montpellier (FR)
(74) Mandataire: Hecké, Gérard
(86) Numéro de dépôt international: PCT/FR2006/002340
(87) Numéro de publication internationale: WO 2007/045763

(56) Documents cités:
- WO-A-93/03506
- FR-A- 2 863 777
- US-A- 3 438 815
- US-A- 5 750 013
- US-A1- 2004 028 992
- US-A1- 2004 157 101

## Description

### Domaine technique de l'invention

L'invention concerne une électrode pour pile à combustible alcaline comportant au moins une couche active, conductrice électronique, conductrice d'ions hydroxydes et catalytique.

L'invention concerne également un procédé de fabrication d'une pile à combustible alcaline comportant au moins une étape de fabrication d'une telle électrode.

### État de la technique

Les piles à combustible alcalines connues, aussi appelées AFC ("Alkaline Fuel Cell"), sont généralement constituées de deux électrodes et d'un électrolyte liquide ou solide et échangeur ou conducteur d'ions hydroxydes OH⁻.

La demande de brevet WO-A-2005/069413 décrit, par exemple, une pile à combustible alcaline comprenant un empilement solide constitué d'une première électrode, d'une membrane solide conductrice d'ions hydroxydes et d'une seconde électrode. Chaque électrode de la pile comporte au moins une couche active en contact avec la membrane solide. Chaque couche active présente des propriétés de conduction électronique, de conduction d'ions hydroxydes et des propriétés catalytiques pour la ou les réactions électrochimiques ayant lieu dans la pile à combustible alcaline. Ainsi, le matériau constituant la couche active comporte au moins un élément catalytique, un élément conducteur électronique et un élément conducteur d'ions hydroxydes. L'élément conducteur d'ions hydroxydes est formé par un polymère à motif styrénique comportant une fonction ammonium quaternaire à laquelle est associé un ion hydroxyde. L'efficacité d'une électrode comportant une telle couche active n'est, cependant, pas optimale et la couche active n'est pas facile à mettre en oeuvre. En effet, les techniques de préparation de la couche active ne sont pas adaptées à une fabrication industrielle.

II a été proposé de réaliser des piles à combustible et/ou des électrodes utilisées dans des piles à combustible, par des techniques issues de la microélectronique, telles que les techniques de dépôt sous vide.

Ainsi, le brevet US5518831 décrit la formation par dépôt sous vide d'une structure électrocatalytique pouvant être utilisée dans une pile à combustible telle qu'une pile à combustible à empilement Electrode-Mèmbrane-Electrode, avec une membrane électrolytique à base d'acide perfluorosulfonique. La structure électrocatalytique est constituée d'une matrice en polymère de type polysiloxane (SiOₓC_{y}H_{z}) dans laquelle sont dispersées des particules discrètes et isolées de matériau catalytique, par exemple du platine. La structure électrocatalytique peut, ainsi, être obtenue en répétant plusieurs fois un cycle de trois étapes de dépôt. Le cycle comporte alors successivement la réalisation d'un premier film polymère par dépôt chimique en phase vapeur assisté par plasma (PECVD), puis le dépôt du matériau catalytique, sous forme de particules discrètes et le dépôt par PECVD d'un second film de polymère de manière à recouvrir lesdites particules. Les particules de matériau catalytique peuvent également être déposées en premier lieu. Dans ce cas, la structure électrocatalytique est réalisée par répétition d'un cycle de deux étapes successives, correspondant respectivement au dépôt des particules de matériau catalytique puis au dépôt PECVD d'un film polymère destiné à recouvrir lesdites particules. Le dépôt des particules en matériau catalytique est, par exemple, réalisé par pulvérisation ou par évaporation. La répétition d'un cycle de deux ou de trois étapes conduit toujours à la formation d'une couche unique formée par une matrice polymère dans laquelle sont dispersées des particules discrètes et isolées de matériau catalytique. Or, la répartition particulière des particules au sein de la matrice polymère ainsi que le matériau composite obtenu ne permettent pas d'obtenir une couche active d'électrode pouvant assurer un fonctionnement optimal d'une pile à combustible alcaline. En effet, bien qu'elle possède des propriétés catalytiques satisfaisantes, la couche active d'électrode ne comporte pas d'éléments conducteurs d'ions hydroxydes et les propriétés de conduction électronique sont limitées.

De même, le brevet US5750013 propose d'utiliser les techniques de dépôt issues de la microélectronique pour réaliser une pile à combustible telle qu'une pile à combustible à membrane solide à base d'un polymère échangeur de protons. La pile à combustible est réalisée en déposant sous vide une pluralité de couches minces, formant successivement une première électrode, une membrane polymère échangeuse de protons, par exemple en Nafion®, et une seconde électrode. Chacune des électrodes est formée par une couche active catalytique comportant une alternance de deux couches superposées, respectivement composées d'une couche de particules métalliques ayant une taille comprise entre 1nm et 10nm et d'une couche conductrice poreuse. La couche de particules métalliques est obtenue par pulvérisation plasma. La couche conductrice poreuse est réalisée par dépôt chimique en phase vapeur, à partir d'un précurseur de type hydrocarbure, de manière à obtenir une couche carbonée poreuse assurant la diffusion des gaz et la conduction électrique. La couche active ainsi formée ne peut, cependant, pas assurer un fonctionnement optimal des piles à combustible alcalines. En effet, la couche active n'est pas ioniquement conductrice et encore moins conductrice d'ions hydroxydes.

### Objet de l'invention

L'invention a pour but une électrode pour pile à combustible alcaline présentant une efficacité optimale et facile à mettre en oeuvre. Plus particulièrement, l'invention a pour but une électrode pour pile à combustible alcaline comportant au moins une couche active, qui présente à la fois des propriétés de conduction électronique, des propriétés de conduction d'ions hydroxydes et des propriétés catalytiques améliorées tout en étant facile à mettre en oeuvre.

Selon l'invention, ce but est atteint par les revendications annexées. Plus particulièrement, ce but est atteint par le fait que la couche active est constituée par un bicouche ou par un empilement d'une pluralité de bicouches, chaque bicouche étant composé :
- d'une couche catalytique comprenant des particules de catalyseur de taille nanométrique
- et d'une couche poreuse comprenant deux faces opposées dont l'une est en contact avec la couche catalytique, la couche poreuse étant constituée d'un matériau composite poreux comportant une matrice en polymère conducteur d'ions hydroxydes dans laquelle est formé un réseau métallique constituant une pluralité de chemins électroniquement conducteurs reliant les deux faces opposées de la couche poreuse.

L'invention a également pour but un procédé de fabrication d'une pile à combustible alcaline comportant au moins une étape de fabrication d'une telle électrode, facile à mettre en oeuvre et, plus particulièrement, adapté à une fabrication industrielle.

Selon l'invention, ce but est atteint par le fait que l'étape de fabrication de l'électrode comporte au moins le dépôt sous vide de la couche active sur une surface libre d'un support, la couche catalytique de chaque bicouche étant formée par dépôt sous vide de particules de catalyseur de taille nanométrique et la couche poreuse étant formée par co-dépôt sous vide d'un polymère conducteur d'ions hydroxydes et d'un métal.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement en coupe un premier mode particulier de réalisation d'une électrode selon l'invention.
La figure 2 représente schématiquement en coupe une partie agrandie de la couche active de l'électrode selon la figure 1.
La figure 3 représente schématiquement en coupe un second mode particulier de réalisation d'une électrode selon l'invention.
La figure 4 représente schématiquement en coupe une pile à combustible comportant deux électrodes selon l'invention.

### Description de modes particuliers de réalisation

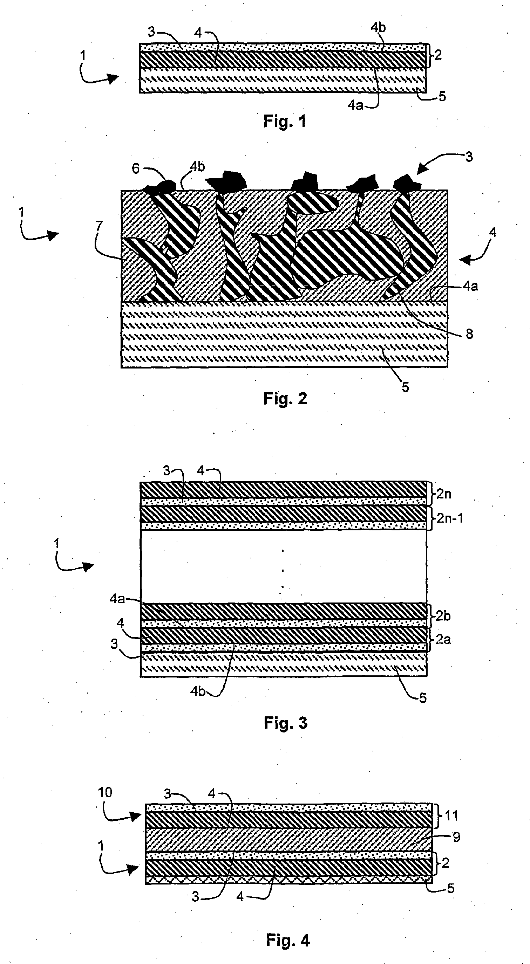

Comme représentée sur les figures 1 à 3, une électrode 1 pour pile à combustible alcaline comporte une couche active, à la fois conductrice électronique, conductrice d'ions hydroxydes et catalytique pour la ou les réactions électrochimiques ayant lieu dans la pile à combustible alcaline.

La couche active est constituée par un bicouche 2, c'est-à-dire par un film mince constitué de deux couches distinctes superposées, ou par un empilement d'une pluralité de bicouches 2a,...,2n, c'est-à-dire par un empilement formé par une alternance de deux couches minces distinctes superposées. Ainsi, chaque bicouche 2, 2a,...,2n est composé d'une couche catalytique 3 et d'une couche poreuse 4 comprenant deux faces opposées 4a et 4b dont l'une est en contact avec la couche catalytique 3.

De plus, la couche active peut être disposée sur une couche supplémentaire 5, de préférence, poreuse et électroniquement conductrice. Dans ce cas, la première couche disposée sur la couche supplémentaire 5 peut être indifféremment une couche poreuse 4 ou bien une couche catalytique 3. Ainsi, sur les figures 1 et 2, la couche poreuse 4 du bicouche 2 est en contact, par sa face 4a, avec la couche supplémentaire 5. Sur la figure 3 représentant un empilement d'un nombre n de bicouches 2a,...,2n, la couche supplémentaire 5 est en contact avec la couche catalytique 3 du premier bicouche 2a de l'empilement.

La couche catalytique 3 comprend des particules de catalyseur de taille nanométrique. Plus particulièrement, comme représentée sur la figure 2, la couche catalytique 3 est constituée par les particules de catalyseur 6. La couche catalytique 3 a, de préférence, une épaisseur comprise entre 2nm et 50nm et plus particulièrement entre 5nm et 10nm. Le catalyseur est, de préférence, choisi parmi le platine, un alliage à base de platine et de ruthénium, de l'argent et du nickel.

Comme représentée sur la figure 2, la couche poreuse 4 est constituée d'un matériau composite poreux comprenant une matrice 7 en polymère conducteur d'ions hydroxydes et des particules de métal 8. La porosité de la couche 4 peut être optimisée par l'utilisation d'un agent porogène introduit lors de la fabrication puis supprimé. L'agent peut, par exemple, être un siloxane. La porosité de la couche 4 autorise, ainsi, le passage, à travers la couche poreuse 4 mais également à travers l'ensemble de la couche active, des espèces gazeuses ou liquides, à oxyder ou à réduire pendant le fonctionnement de la pile à combustible alcaline. La couche poreuse 4 a, de préférence, une épaisseur comprise entre 50nm et 1000nm et, avantageusement, comprise entre 100nm et 200nm. La présence d'un polymère conducteur d'ions hydroxydes dans la couche poreuse 4 permet, ainsi, d'assurer le transport et donc la conduction des ions hydroxydes à partir des sites catalytiques formés par les particules de catalyseur 6 ou jusqu'auxdits sites catalytiques. La capacité de conduction des ions hydroxydes est, plus particulièrement, assurée, dans le polymère, par une fonction échangeuse d'ions hydroxydes, par exemple choisie parmi la fonction ammonium quaternaire, la fonction phosphonium quaternaire et la fonction sulfonium tertiaire. Le polymère est, par exemple, obtenu par dépôt plasma, à partir d'un précurseur d'une fonction échangeuse d'anions tel qu'une amine insaturée, par exemple la triallylamine ou l'allylamine dans laquelle la fonction amine est remplacée par une fonction ammonium quaternaire.

Les particules de métal 8 forment, dans la matrice 7, un réseau métallique percolant, c'est-à-dire un réseau métallique constituant une pluralité de chemins électroniquement conducteurs reliant les deux faces opposées 4a et 4b de la couche poreuse 4. Le métal constituant le réseau métallique est, de préférence, choisi parmi l'or et l'argent.

Par ailleurs, comme illustré sur la figure 2, les particules de catalyseur 6 sont de préférence en contact à la fois avec la matrice 7 en polymère et les particules de métal 8, formant ainsi des points triples, où se produisent la ou les réactions électrochimiques. La présence de points triples permet, ainsi, d'augmenter l'efficacité catalytique de la couche active et donc d'obtenir une électrode particulièrement efficace pour être utilisée dans une pile à combustible alcaline. Le fait que la couche active présente une structure particulière en forme d'un ou de plusieurs bicouches permet également de réduire la quantité de catalyseur nécessaire au fonctionnement optimal de la pile à combustible alcaline. Cela permet, aussi, d'augmenter la surface active de ladite couche active et d'améliorer sa conductivité électronique ainsi que sa conductivité des ions hydroxydes. Elle est, enfin, facile à mettre en oeuvre, notamment grâce à des techniques de dépôt issues de la microélectronique comme les techniques de dépôt sous vide.

En effet, une électrode d'une pile à combustible selon l'invention peut être réalisée par au moins une étape de dépôt sous vide de la couche active sur une surface libre d'un support. Ainsi, la couche catalytique 3 de chaque bicouche 2, 2a,...,2n est formée en déposant sous vide les particules de catalyseur 6. La couche poreuse 4 de chaque bicouche 2, 2a,...,2n est formée par co-dépôt sous vide, à la fois du polymère conducteur d'ions hydroxydes et du métal destiné à former les particules de métal 8.

Plus particulièrement, le dépôt de la couche catalytique 3 de chaque bicouche 2, 2a,...,2n peut, par exemple, être réalisé par dépôt chimique en phase vapeur à partir d'un précurseur de type organométallique (MOCVD) ou par électrodéposition ou réduction chimique d'un sel contenant le catalyseur, par exemple par électroréduction de H₂PtCl₆ pour obtenir une couche catalytique en platine. Avantageusement, le dépôt des particules de catalyseur 6 est réalisé par pulvérisation sous vide, de préférence par pulvérisation RF magnétron. Les conditions, de dépôt sont, plus particulièrement, contrôlées de manière à obtenir un dépôt de particules de catalyseur 8 de taille nanométrique et séparées les unes des autres.

Le co-dépôt de la couche poreuse 4 peut être effectué en réalisant simultanément le dépôt chimique en phase vapeur assisté par plasma (PECVD) pour réaliser la matrice 7 en polymère conducteur d'ions hydroxydes et le dépôt par évaporation sous vide des particules de métal 8. Les conditions de dépôt sont, plus particulièrement, déterminées de manière à obtenir un matériau composite poreux comprenant la matrice 7 en polymère conducteur d'ions hydroxydes, dans laquelle est formé le réseau métallique percolant. De plus, le dépôt PECVD du polymère est, plus particulièrement, réalisé à partir d'un précurseur générant des fonctions échangeuses d'ions hydroxydes telles que les fonctions ammonium quaternaire, phosphonium quaternaire ou sulfonium tertiaire.

Selon un premier mode particulier de réalisation, une électrode pour pile à combustible telle que celle représentée sur la figure 3 est, par exemple, réalisée en déposant successivement n bicouches 2a à 2n sur la surface libre d'une couche supplémentaire 5 disposée dans une enceinte de dépôt. La couche supplémentaire est, par exemple, un support de papier carbone et elle est, de préférence, préalablement nettoyée avec de l'alcool isopropylique puis séchée sous argon. L'enceinte de dépôt comporte, ainsi, une cible de pulvérisation fixée sur une électrode munie d'un générateur de champ magnétique, pour réaliser le dépôt des couches catalytiques 3 et une source d'évaporation pour former les particules de métal 8 du matériau composite poreux.

Ainsi, dans un premier temps, du gaz argon est introduit dans l'enceinte et la pression est maintenue à 10⁻² Torr. Un plasma est généré en appliquant un potentiel électrique élevé ou une fréquence élevée sur l'électrode associée à la cible de pulvérisation. Ceci provoque le dépôt des particules de catalyseur 6 sur la couche supplémentaire 5 et donc la formation d'une première couche catalytique 3.

L'enceinte de dépôt est, dans un deuxième temps, mise sous vide et un précurseur du polymère conducteur d'ions hydroxydes et des vapeurs de métal sont introduits dans l'enceinte. Le précurseur du polymère est, par exemple, une amine insaturée, par exemple la triallylamine ou l'allylamine, dans laquelle la fonction amine est remplacée par une fonction ammonium quaternaire. Un plasma est alors généré en appliquant un potentiel électrique élevé ou une fréquence élevée sur l'électrode, de manière à réaliser le co-dépôt du matériau composite poreux, formant, ainsi, une première couche poreuse 4 sur la première couche catalytique 3. Ainsi, les premières couches, respectivement catalytique 3 et poreuse 4, forment le premier bicouche 2a disposé sur la couche supplémentaire 5.

Les deux étapes successives permettant de réaliser le premier bicouche 2a sont ensuite répétées plusieurs fois de manière à former l'empilement des n bicouches.

De plus, la couche active ainsi formée peut subir un traitement chimique permettant d'optimiser le nombre de fonctions assurant la conduction d'ions hydroxydes. Pour des fonctions ammonium quaternaires, la couche active peut être traitée par CH₃I.

Selon un second mode particulier de réalisation, un empilement de 10 bicouches 2 a été réalisé en répétant 10 fois, un cycle de deux étapes successives, respectivement de pulvérisation RF magnétron et de co-dépôt sous vide. La première étape, de pulvérisation RF magnetron, est réalisée à l'aide d'une cible en platine pour former une couche catalytique constituée de particules de platine de taille manométrique. L'intensité et la tension appliquées lors du dépôt sont respectivement de 20mA et de 1,5kV, la pression en argon à l'intérieur de l'enceinte est de 5.10⁻³mbar et la durée du dépôt est de 20 secondes. La seconde étape, de co-dépôt, est réalisée simultanément par évaporation d'un filament d'or, grâce au passage d'un courant dans ledit filament et par introduction dans l'enceinte de vapeurs d'un précurseur du polymère échangeur d'ions hydroxyde. Un plasma est généré par application d'ondes RF continues pour réaliser le co-dépôt. La pression dans l'enceinte est de 0,8mbar, la puissance est de 50W et la durée du co-dépôt est de 5 minutes. L'enceinte est, ensuite évacuée, de manière à être prête pour un autre cycle de dépôt. Lorsque les 10 cycles ont été réalisés, la couche active obtenue peut être traitée chimiquement, pour optimiser le nombre de fonctions d'ions hydroxydes.

La fabrication d'une électrode selon l'invention présente l'avantage d'être facile à mettre en oeuvre et peut être réalisée dans une même enceinte de dépôt, ce qui la rend particulièrement adaptée pour des applications industrielles.

De plus, la fabrication d'une électrode selon l'invention peut être incorporée dans un procédé de fabrication globale d'une pile à combustible alcaline. Ceci permet alors de réaliser simplement, rapidement et de façon industrielle une pile à combustible alcaline. Une pile à combustible alcaline telle que représentée sur la figure 4 peut être réalisée en déposant successivement sur la surface libre d'une couche supplémentaire 5, une première électrode 1, une membrane électrolytique 9 sous forme d'une couche mince non poreuse et une seconde électrode 10. Les première et seconde électrodes 1 et 10 représentées sur la figure 4 comportent respectivement des premier et second bicouches 2 et 11 comportant chacun une couche poreuse 4 et une couche catalytique 3.

Ainsi, une fois la première électrode 1 déposée sur la surface libre de la couche supplémentaire 5 selon une étape de fabrication telle que décrite précédemment, la membrane électrolytique 9 est déposée par une étape de dépôt sous vide sur la surface libre de la première électrode 1. Sur la figure 4, la surface libre de la première électrode 1 correspond à la surface libre de la couche catalytique 3 puisque le premier bicouche 2 est réalisé en déposant successivement la couche poreuse 4, puis la couche catalytique 3 sur la couche supplémentaire 5. Une seconde électrode 10 peut, ensuite être déposée dans les mêmes conditions que la première électrode sur la surface libre de la membrane électrolytique 9. Sur la figure 4, la seconde électrode 10 est identique à la première électrode 1, le bicouche 11 de la seconde électrode 10 étant identique à celui de la première électrode 1.

L'ordre des couches catalytique et poreuse, dans le second bicouche 11 ainsi que le nombre de bicouches dans la seconde électrode 10 pourraient, cependant, être différents de ceux de la première électrode 1.

Par ailleurs, les catalyseurs respectifs des couches catalytiques des premier et second bicouches 2 et 11 ainsi que les polymères respectifs des couches poreuses des premier et second bicouches 2 et 11 peuvent également être identiques ou différents. De la même manière, la membrane électrolytique, sous forme d'une couche mince non poreuse, peut comprendre un polymère conducteur d'ions hydroxydes identique ou différent du ou des polymères des couches poreuses des première et seconde électrodes. Ainsi, la membrane électrolytique peut, par exemple, être réalisée à partir du même précurseur de polymère que les couches poreuses des première et seconde électrodes, mais avec un mode opératoire différent, de manière à obtenir une membrane électrolytique non poreuse. La réalisation d'une pile à combustible peut, ainsi, être réalisée de manière simple et rapide et dans une même enceinte de dépôt.

## Revendications

1. Electrode (1, 10) pour pile à combustible alcaline comportant au moins une couche active, conductrice électronique, conductrice d'ions hydroxydes et catalytique, électrode **caractérisée en ce que** la couche active est constituée par un bicouche (2, 11) ou par un empilement d'une pluralité de bicouches (2a,..., 2n), chaque bicouche (2, 11, 2a,..., 2n) étant composé :
- d'une couché catalytique (3) comprenant des particules de catalyseur (6) de taille nanométrique
- et d'une couche poreuse (4) comprenant deux faces opposées (4a, 4b) dont l'une est en contact avec la couche catalytique (3), la couche poreuse (4) étant constituée d'un matériau composite poreux comportant une matrice (7) en polymère conducteur d'ions hydroxydes dans laquelle est formé un réseau métallique constituant une pluralité de chemins électroniquement conducteurs reliant les deux faces opposées de la couche poreuse.

2. Electrode (1, 10) selon la revendication 1, **caractérisée en ce que** la couche catalytique (3) a une épaisseur comprise entre 2nm et 50nm.

3. Electrode (1, 10) selon l'une des revendications 1 et 2, **caractérisée en ce que** la couche poreuse (4) a une épaisseur comprise entre 50nm et 1000nm.

4. Electrode (1, 10) selon l'une quelconque des revendications 1 à 3, **caractérisée en ce que** le polymère conducteur d'ions hydroxydes comporte au moins une fonction échangeuse d'ions hydroxydes choisie parmi la fonction ammonium quaternaire, la fonction phosphonium quaternaire et la fonction sulfonium tertiaire.

5. Electrode (1, 10) selon l'une quelconque des revendications 1 à 4, **caractérisée en ce que** le catalyseur est choisi parmi le platine, un alliage à base de platine et de ruthénium, de l'argent et du nickel.

6. Electrode (1, 10) selon l'une quelconque des revendications 1 à 5, **caractérisée en ce que** le métal (8) constituant le réseau métallique du matériau composite poreux est choisi parmi l'argent et l'or.

7. Electrode (1, 10) selon l'une quelconque des revendications 1 à 6, **caractérisée en ce qu'**elle comporte une couche supplémentaire (5) sur laquelle est disposée la couche active.

8. Procédé de fabrication d'une pile à combustible alcaline comportant au moins une étape de fabrication d'une électrode (1, 10) selon l'une quelconque des revendications 1 à 7, **caractérisé en ce que** l'étape de fabrication de l'électrode (1, 10) comporte au moins le dépôt sous vide de la couche active sur une surface libre d'un support, la couche catalytique (3) de chaque bicouche (2, 11, 2a,...,2n) étant formée par dépôt sous vide de particules de catalyseur (6) de taille nanométrique et la couche poreuse (4) étant formée par co-dépôt sous vide d'un polymère conducteur d'ions hydroxydes et d'un métal (8).

9. Procédé selon la revendication 8, **caractérisé en ce qu'**une pluralité de bicouches (2, 1.1, 2a,...,2n) est successivement déposée sur ladite surface libre du support, de manière à former l'empilement constituant la couche active.

10. Procédé selon l'une des revendications 8 et 9, **caractérisé en ce que** le dépôt de la couche catalytique (3) est réalisé par pulvérisation sous vide.

11. Procédé selon l'une quelconque des revendications 8 à 10, **caractérisé en ce que** le co-dépôt de la couche poreuse (3) est réalisé simultanément par dépôt chimique en phase vapeur assisté par plasma du polymère conducteur d'ions hydroxydes et par évaporation du métal (8).

12. Procédé selon l'une quelconque des revendications 8 à 11, **caractérisé en ce que** le dépôt sous vide de la couche active sur une surface libre d'un support est suivi d'une étape de traitement chimique de ladite couche active.

13. Procédé selon l'une quelconque des revendications 8 à 12, **caractérisé en ce qu'**il comporte successivement :
- une étape de fabrication d'une première électrode (1), la surface libre du support destinée à recevoir la couche active de la première électrode (1) étant constituée par une face libre de la couche supplémentaire (5),
- une étape de dépôt sous vide d'une membrane électrolytique (9), sur la surface libre de la couche active de la première électrode (1),
- et une étape de fabrication d'une seconde électrode (10), la surface du support destinée à recevoir la couche active de la seconde électrode (10) étant constituée par la surface libre de la membrane électrolytique (9).

14. Procédé selon la revendication 13, **caractérisé en ce que** les catalyseurs respectifs des couches catalytiques (3) des première et seconde électrodes (1, 10) sont identiques.

15. Procédé selon l'une des revendications 13 et 14, **caractérisé en ce que** les polymères respectifs des couches poreuses (4) des première et seconde électrode (1, 10) sont identiques.

16. Procédé selon la revendication 15, **caractérisé en ce que** la membrane électrolytique (9) est formée par une couche mince non poreuse comprenant un polymère conducteur d'ions hydroxydes identique au polymère des couches poreuses (4) des première et seconde électrodes (1, 10).

## Patentansprüche

1. Elektrode (1, 10) für eine Alkali-Brennstoffzelle mit mindestens einer aktiven, elektronisch leitenden, Hydroxidionen leitenden und katalytischen Schicht, wobei die Elektrode **dadurch gekennzeichnet ist, dass** die aktive Schicht eine Doppelschicht (2, 11) oder einen Stapel einer Vielzahl von Doppelschichten (2a, ..., 2n) aufweist, wobei jede Doppelschicht (2, 11, 2a, .., 2n) folgendes besitzt:
- eine katalytische Schicht (3) mit Katalysatorpartikeln (6) nanometrischer Größe,
- eine poröse Schicht (4) mit zwei gegenüberliegenden Seiten (4a, 4b), von denen eine mit der katalytischen Schicht (3) in Kontakt ist, wobei die poröse Schicht (4) einen porösen Verbundwerkstoff aufweist, der eine Hydroxidionen leitende Polymermatrix (7) besitzt, in der ein Metallnetz gebildet ist, das eine Vielzahl elektronisch leitender Bahnen aufweist, die die beiden gegenüberliegenden Seiten der porösen Schicht verbinden.

2. Elektrode (1, 10) nach Anspruch 1, **dadurch gekennzeichnet, dass** die katalytische Schicht (3) eine Stärke zwischen 2 nm und 50 nm aufweist.

3. Elektrode (1, 10) nach einem der Ansprüche 1 und 2, **dadurch gekennzeichnet, dass** die poröse Schicht (4) eine Stärke zwischen 50 nm und 1000 nm aufweist.

4. Elektrode (1, 10) nach einem der Ansprüche 1 bis 3, **dadurch gekennzeichnet, dass** das Hydroxidionen leitende Polymer mindestens eine Hydroxidionen-Austauschfunktion aufweist, die unter der quaternären Ammoniumfunktion, der quaternären Phosphoniumfunktion und der tertiären Sulfoniumfunktion ausgewählt ist.

5. Elektrode (1, 10) nach einem der Ansprüche 1 bis 4, **dadurch gekennzeichnet, dass** der Katalysator unter Platin, einer Legierung auf der Basis von Platin und Ruthenium, Silber und Nickel ausgewählt ist.

6. Elektrode (1, 10) nach einem der Ansprüche 1 bis 5, **dadurch gekennzeichnet, dass** das Metall (8), welches das Metallnetz des porösen Verbundwerkstoffes aufweist, aus Silber und Gold ausgewählt ist.

7. Elektrode (1, 10) nach einem der Ansprüche 1 bis 6, **dadurch gekennzeichnet, dass** sie eine zusätzliche Schicht (5) aufweist, auf der die aktive Schicht angeordnet ist.

8. Verfahren zur Herstellung einer Alkali-Brennstoffzelle, das mindestens einen Schritt der Herstellung einer Elektrode (1, 10) nach einem der Ansprüche 1 bis 7 aufweist, **dadurch gekennzeichnet, dass** der Schritt der Herstellung der Elektrode (1, 10) mindestens das Aufbringen unter Vakuum der aktiven Schicht auf einer Fläche aufweist, die frei ist von einem Träger, wobei die katalytische Schicht (3) jeder Doppelschicht (2, 11, 2a, ...., 2n) durch das Aufbringen unter Vakuum von Katalysatorpartikeln (6) nanometrischer Größe gebildet ist, und die poröse Schicht (4) durch zusätzliches Aufbringen unter Vakuum eines Hydroxidionen leitenden Polymers und eines Metalles (8) gebildet ist.

9. Verfahren nach Anspruch 8, **dadurch gekennzeichnet, dass** eine Vielzahl von Doppelschichten (2, 11, 2a, ....., 2n) nacheinander auf die Fläche, die frei ist von einem Träger, aufgebracht ist, so dass der Stapel gebildet ist, der die aktive Schicht aufweist.

10. Verfahren nach einem der Ansprüche 8 und 9, **dadurch gekennzeichnet, dass** das Aufbringen der katalytischen Schicht (3) durch Vakuumpulverbeschichtung durchgeführt wird.

11. Verfahren nach einem der Ansprüche 8 bis 10, **dadurch gekennzeichnet, dass** das zusätzliche Aufbringen der porösen Schicht (3) gleichzeitig durch chemisches Aufdampfen, unterstützt durch Plasma des Hydroxidionen leitenden Polymers, und durch Verdampfen des Metalles (8) erfolgt.

12. Verfahren nach einem der Ansprüche 8 bis 11, **dadurch gekennzeichnet, dass** das Aufbringen unter Vakuum der aktiven Schicht auf einer Fläche, die frei ist von einem Träger, gefolgt ist von einem Schritt der chemischen Behandlung der aktiven Schicht.

13. Verfahren nach einem der Ansprüche 8 bis 12, **dadurch gekennzeichnet, dass** es nacheinander folgendes aufweist:
- einen Schritt der Herstellung einer ersten Elektrode (1), wobei die Fläche, die frei ist von dem Träger, und die die aktive Schicht der ersten Elektrode (1) aufnimmt, eine Seite aufweist, die frei ist von der zusätzlichen Schicht (5),
- einen Schritt des Aufbringens unter Vakuum einer elektrolytischen Membran (9) auf der Fläche, die frei ist von der aktiven Schicht der ersten Elektrode (1),
- und einen Schritt der Herstellung einer zweiten Elektrode (10), wobei die Fläche des Trägers, die die aktive Schicht der zweiten Elektrode (10) aufnimmt, die Fläche aufweist, die frei ist von der elektrolytischen Membran (9).

14. Verfahren nach Anspruch 13, **dadurch gekennzeichnet, dass** die jeweiligen Katalysatoren der katalytischen Schichten (3) der ersten und zweiten Elektroden (1, 10) identisch sind.

15. Verfahren nach einem der Ansprüche 13 und 14, **dadurch gekennzeichnet, dass** die jeweiligen Polymere der porösen Schichten (4) der ersten und zweiten Elektrode (1, 10) identisch sind.

16. Verfahren nach Anspruch 15, **dadurch gekennzeichnet, dass** die elektrolytische Membran (9) durch eine nicht poröse, dünne Schicht gebildet ist, die ein Hydroxidionen leitendes Polymer aufweist, das mit dem Polymer der porösen Schichten (4) der ersten und zweiten Elektroden (1, 10) identisch ist.

## Claims

1. Electrode (1, 10) for alkali fuel cell comprising at least one active layer, conducting electrons and hydroxide ions and being catalytic, electrode **characterized in that** the active layer is formed by a bilayer (2, 11) or by a stack of a plurality of bilayers (2a,..., 2n), each bilayer (2, 11, 2a,..., 2n) being composed of:
- a catalytic layer (3) comprising catalyst particles (6) of nanometric size, and
- a porous layer (4) comprising two opposite faces (4a, 4b) one of which is in contact with the catalytic layer (3), the porous layer (4) being formed by a porous composite material comprising a hydroxide ion conducting polymer matrix (7) in which a metallic lattice constituting a plurality of electronically conducting paths connecting the two opposite faces of the porous layer is formed.

2. Electrode (1, 10) according to claim 1, **characterized in that** the catalytic layer (3) has a thickness comprised between 2nm and 50nm.

3. Electrode (1, 10) according to one of claims 1 and 2, **characterized in that** the porous layer (4) has a thickness comprised between 50nm and 1000nm.

4. Electrode (1, 10) according to any one of claims 1 to 3, **characterized in that** the hydroxide ion conducting polymer comprises at least one hydroxide ion exchange function selected from the quaternary ammonium function, the quaternary phosphonium function and the tertiary sulphonium function.

5. Electrode (1, 10) according to any one of claims 1 to 4, **characterized in that** the catalyst is selected from platinum, a platinum and ruthenium based alloy, silver and nickel.

6. Electrode (1, 10) according to any one of claims 1 to 5, **characterized in that** the metal (8) constituting the metallic lattice of the porous composite material is selected from silver and gold.

7. Electrode (1, 10) according to any one of claims 1 to 6, **characterized in that** it comprises an additional layer (5) on which the active layer is arranged.

8. Method for producing an alkali fuel cell comprising at least one fabrication step of an electrode (1, 10) according to any one of claims 1 to 7, **characterized in that** the fabrication step of the electrode (1, 10) comprises at least vacuum deposition of the active layer on a free surface of a support, the catalytic layer (3) of each bilayer (2, 11, 2a,..., 2n) being formed by vacuum deposition of catalyst particles (6) of nanometric size and the porous layer (4) being formed by vacuum co-deposition of a hydroxide ion conducting polymer and of a metal (8).

9. Method according to claim 8, **characterized in that** a plurality of bilayers (2, 11, 2a,..., 2n) is successively deposited on said free surface of the support so as to form the stack constituting the active layer.

10. Method according to one of claims 8 and 9, **characterized in that** deposition of the catalytic layer (3) is performed by vacuum sputtering.

11. Method according to any one of claims 8 to 10, **characterized in that** co-deposition of the porous layer (3) is performed simultaneously by plasma enhanced chemical vapor deposition of the hydroxide ion conducting polymer and by evaporation of the metal (8).

12. Method according to any one of claims 8 to 11, **characterized in that** vacuum deposition of the active layer on a free surface of a support is followed by a chemical treatment step of said active layer.

13. method according to any one of claims 8 to 12, **characterized in that** it successively comprises:
- a fabrication step of a first electrode (1), the free surface of the support designed to receive the active layer of the first electrode (1) being formed by a free face of the additional layer (5),
- a vacuum deposition step of an electrolytic membrane (9) on the free surface of the active layer of the first electrode (1), and
- a fabrication step of a second electrode (10), the surface of the support designed to receive the active layer of the second electrode (10) being formed by the free surface of the electrolytic membrane (9).

14. Method according to claim 13, **characterized in that** the respective catalysts of the catalytic layers (3) of the first and second electrodes (1, 10) are identical.

15. Method according to any one of claims 13 and 14, **characterized in that** the respective polymers of the porous layers (4) of the first and second electrodes (1, 10) are identical.

16. Method according to claim 15, **characterized in that** the electrolytic membrane (9) is formed by a non-porous thin layer comprising a hydroxide ion conducting polymer identical to the polymer of the porous layers (4) of the first and second electrodes (1, 10).
